# EUROPÄISCHE PATENTSCHRIFT

(11) **EP 4 545 820 B1**
(45) Veröffentlichungstag und Bekanntmachung des Hinweises auf die Patenterteilung: **08.07.2026**
(21) Anmeldenummer: 24206645.4
(22) Anmeldetag: 15.10.2024
(51) Int. Cl.: F16H 1/14, F16H 57/021, F16H 57/038, F16H 57/00, F16H 57/022, F16H 57/12

(54) **GETRIEBEZUSAMMENBAU MIT AXIAL VERSTELLBAREM KEGELZAHNRAD**
GEAR ASSEMBLY WITH AXIALLY ADJUSTABLE BEVEL GEAR
ENSEMBLE DE TRANSMISSION AVEC ENGRENAGE CONIQUE AXIALEMENT RÉGLABLE

(30) Priorität: 24.10.2023 DE 102023129237
(43) Veröffentlichungstag der Anmeldung: 30.04.2025
(73) Patentinhaber: Deere & Company, Moline, IL 61265 (US)
(72) Erfinder: VERGARA MARTINEZ, Daniel, 68163 Mannheim (DE); PEREZ, Jose Javier, 68163 Mannheim (DE)
(74) Vertreter: Reichert, Christian

(56) Entgegenhaltungen:
- DE-A1- 10 234 331
- GB-A- 1 112 245
- US-A- 4 248 487
- US-A- 4 729 252

## Beschreibung

Die Erfindung betrifft einen Getriebezusammenbau mit einem Getriebegehäuse, in dem eine erste Welle mit einem ersten Kegelzahnrad und eine zweite Welle mit einem zweiten Kegelzahnrad drehbar gelagert sind, wobei die Wellen einen Winkel untereinander einschließen und die erste Welle in einer Buchse gelagert ist, die mit einem Gewinde ausgestattet ist, das mit einem mit dem Getriebegehäuse verbundenen Gewinde zusammenwirkt, sodass durch Drehen der Buchse gegenüber dem Getriebegehäuse eine axiale Verstellung der ersten Welle erfolgt, und wobei sich die Buchse durch eine von den Gewinden axial beabstandete Fläche an einer komplementären Fläche des Gehäuses in radialer Richtung abstützt.

### Stand der Technik

Kegelzahnradgetriebe werden verwendet, um ein Drehmoment zwischen zwei Wellen zu übertragen, die unter einem Winkel angeordnet sind. Ein möglicher Anwendungsfall ist ein Entladeschneckenförderer eines Mähdreschers, bei dem eine erste und eine zweite Förderschnecke einen Winkel untereinander einschließen, vgl. EP 3 391 725 A1.

Um eine optimale Drehmomentübertragung bei minimalem Verschleiß des Getriebes zu erreichen, ist es sinnvoll, eine der Wellen in deren axialer Längsrichtung in eine optimierte Position zu verbringen, in welcher die Zähne des einen Kegelzahnrads hinreichend weit in die Zwischenräume zwischen den Zähnen des anderen Kegelzahnrads eindringen, ohne jedoch den Boden zwischen den Zähnen nennenswert zu berühren. Aufgrund von unvermeidbaren Fertigungstoleranzen ist es in der Regel notwendig, die Getriebe individuell abzustimmen, um diese optimierte Position zu erreichen.

Die traditionelle Vorgehensweise zur Positionierung der Welle mit dem Ziel der Einstellung des Flankenspiels der Kegelzahnräder sieht vor, durch Hinzufügen oder Wegnehmen von Unterlegscheiben, die eine der Wellen und somit des Kegelzahnrads in axialer Richtung verschieben, eine möglichst optimale Position zu erreichen und durch Schrauben in dieser Position zu fixieren. Diese Vorgehensweise erfordert eine Vielzahl von unterschiedlichen Unterlegscheiben und aufwändige, manuelle Arbeit bei der Getriebefertigung.

Die als gattungsbildend angesehene DE 102 34 331 A1 schlägt zur Vermeidung dieser Nachteile vor, die Welle an einer Buchse zu lagern, die mit einem Außengewinde versehen ist, welches seinerseits mit einem Innengewinde eines Flanschrings zusammenwirkt, der mit dem Getriebegehäuse verbunden ist und sich im jene Durchgangsöffnung im Getriebegehäuse herum erstreckt, welche die Welle und die Buchse aufnimmt. Zudem stützt sich ein gegenüber dem Gewinde axial versetzter zylindrischer Ansatz der Buchse passgenau an der Durchgangsöffnung des Getriebegehäuses ab. Die Buchse ist demnach gegenüber dem Gewindering und dem Getriebegehäuse drehbar, sodass die Welle durch Drehen der Buchse in axialer Richtung verschoben wird und auf diese Weise eine Justierung der axialen Position der Welle und des Kegelrads erfolgt. Eine Arretierung der Buchse erfolgt durch eine Schraube, die in eine radiale Gewindebohrung im Flanschring eingedreht wird.

### Aufgabe

Wie erwähnt, beruht die Fixierung der Buchse in der DE 102 34 331 A1 auf der Schraube, die sich radial durch den Flanschring erstreckt. Hierzu sind in Form der Schraube und der Gewindebohrung separate Teile vorzusehen und zudem ein weiterer Arbeitsgang zum Festziehen der Schraube notwendig. Zudem kann sich die Schraube im Betrieb lösen, z.B. wenn das Getriebe in einer vibrierenden Umgebung verwendet wird, was zu einem Verdrehen des Gewindes der Buchse gegenüber dem Gewindering und zu einer ungewünschten Verstellung der Welle führt.

Die der Erfindung zu Grunde liegende Aufgabe wird darin gesehen, einen gegenüber dem Stand der Technik verbesserten Getriebezusammenbau bereitzustellen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Getriebezusammenbau ist mit einem Getriebegehäuse ausgestattet, in dem eine erste Welle mit einem ersten Kegelzahnrad und eine zweite Welle mit einem zweiten Kegelzahnrad drehbar gelagert sind, wobei die Wellen einen Winkel untereinander einschließen und die erste Welle in einer Buchse gelagert ist, die mit einem Gewinde ausgestattet ist, das mit einem mit dem Getriebegehäuse verbundenen Gewinde zusammenwirkt, sodass durch Drehen der Buchse gegenüber dem Getriebegehäuse eine axiale Verstellung der ersten Welle erfolgt, und wobei sich die Buchse durch eine von den Gewinden axial beabstandete Fläche an einer komplementären Fläche des Gehäuses in radialer Richtung abstützt. Die Flächen sind konisch und verengen sich in Richtung auf die zweite Welle hin.

Auf diese Weise verspannen sich das Getriebegehäuse und die Buchse untereinander, was zur Fixierung der Buchse führt und eine unbeabsichtigte Verstellung der Buchse vermeidet.

### Ausführungsbeispiel

Anhand der Abbildungen wird ein Ausführungsbeispiel der Erfindung erläutert. Es zeigen:
- Fig. 1a: einen Schnitt durch einen Getriebezusammenbau,
- Fig. 1b: einen vergrößerten Ausschnitt aus Figur 1, und
- Fig. 2: eine perspektivische Explosionsansicht des Getriebezusammenbaus.

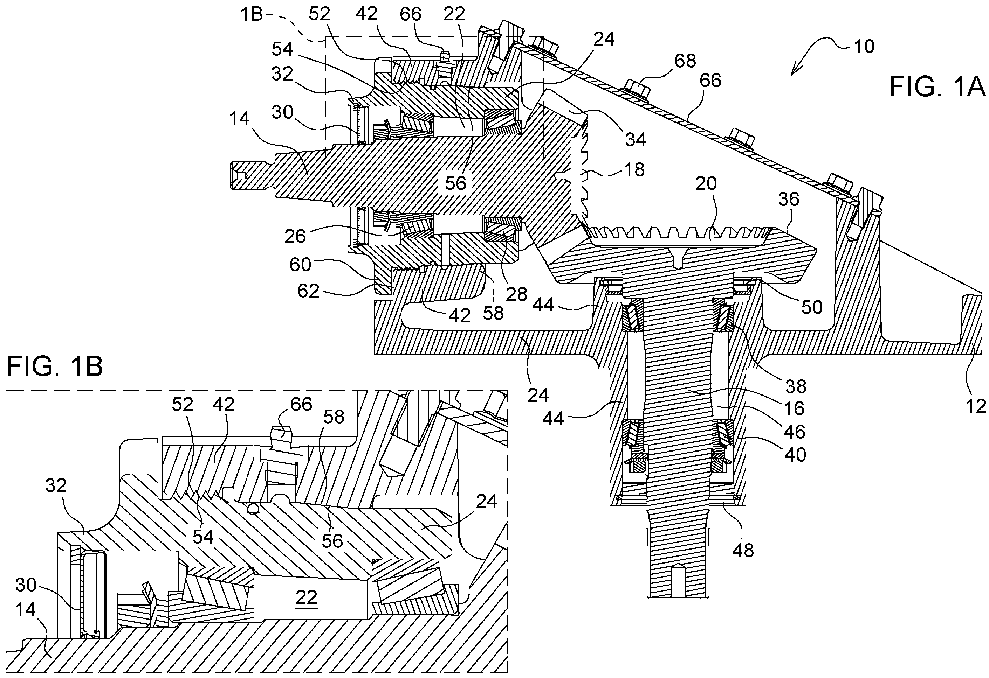

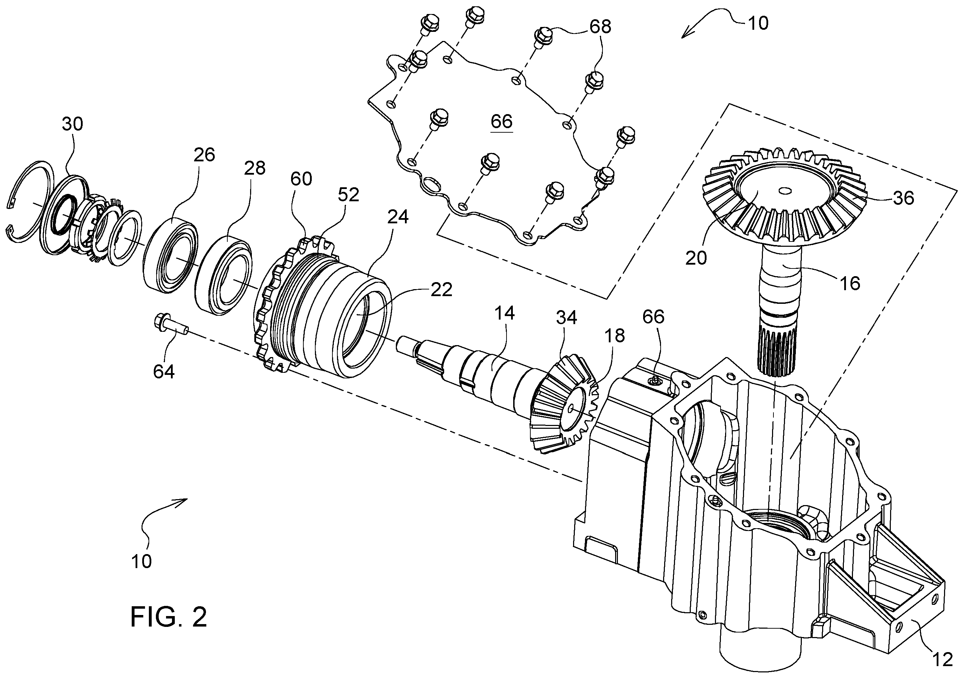

Die Figuren 1a, 1b und 2 zeigen einen Getriebezusammenbau 10, der ein Getriebegehäuse 12 umfasst, in welchem eine erste Welle 14 und eine zweite Welle 16 drehbar abgestützt sind. Am innerhalb des Getriebegehäuses 12 angeordneten, proximalen Ende der ersten Welle 14 ist ein erstes Kegelzahnrad 18 befestigt oder einteilig damit hergestellt. Am innerhalb des Getriebegehäuses 12 angeordneten, proximalen Ende der zweiten Welle 16 ist ein zweites Kegelzahnrad 20 befestigt oder einteilig damit hergestellt. Die Kegelzahnräder 18, 20 umfassen jeweils Zähne 34, 36, die untereinander kämmen, um ein Drehmoment von der ersten Welle 14 auf die zweite Welle 16 zu übertragen oder umgekehrt. Die erste Welle 14 schließt mit der zweiten Welle 16 einen (von 0° verschiedenen) Winkel ein, der in der gezeigten Ausführungsform zumindest näherungsweise 90° beträgt, jedoch auch davon abweichen könnte. Der Getriebezusammenbau 10 kann beispielsweise in einem Entladeschneckenförderer eines Mähdreschers verwendet werden, um zwei Wendel untereinander zu koppeln, die einen sich von 0° unterscheidenden Winkel einschließen. Die Begriffe axial und radial beziehen sich im Folgenden auf die Wellen 14 und 16, und innen und außen auf das Getriebegehäuse 12.

Die erste Welle 14 erstreckt sich durch eine Öffnung 22 in einem rohrförmigen Abschnitt 42 des Getriebegehäuses 12 nach außen und ist durch axial beabstandete Lagerungen 26, 28 drehbar und in axialer Richtung der ersten Welle 14 unverschiebbar an einer Buchse 24 abgestützt, die ihrerseits die erste Welle 14 umschließt und in der Öffnung 22 angebracht ist. Nach außen hin ist die erste Welle 14 durch einen Dichtungszusammenbau 30, der sich am äußeren Ende der Buchse 24 zwischen dem äußeren Umfang der Welle 14 und einem äußeren, ringförmigem Stutzen 32 der Buchse 24 erstreckt, abgedichtet.

Die zweite Welle 16 ist durch axial beabstandete Lagerungen 38, 40 an einem weiteren rohrförmigen Abschnitt 44 des Getriebegehäuses 12 gelagert und erstreckt sich durch eine im Abschnitt 44 vorgesehene Öffnung 46 des Getriebegehäuses 12 nach außen. Am äußeren Ende des Abschnitts 44 ist ein Dichtungszusammenbau 48 vorgesehen, der sich zwischen der zweiten Welle 16 und dem Abschnitt 44 erstreckt. Ein weiterer Dichtungszusammenbau 50 ist am inneren Ende des Abschnitts 44 zwischen der zweiten Welle 16 und dem Abschnitt 44 angebracht. Das Getriebegehäuse 12 mit den rohrförmigen Abschnitten 42 und 44 kann insbesondere als Gussteil hergestellt werden.

Die Buchse 24 ist im Wesentlichen ein hohler Zylinder, in dessen Innenraum sich die erste Welle 14 erstreckt. Die Buchse 24 ist an ihrem Umfang, in ihrem dem äußeren Bereich des Abschnitts 42 benachbarten Abschnitt, mit einem Außengewinde 54 versehen, welches sich im Eingriff mit einem Innengewinde 52 befindet, das im äußeren Bereich des Abschnitts 42 vorgesehen ist. Weiterhin ist die Buchse 24 an ihrem Umfang, in ihrem dem inneren Bereich des Abschnitts 42 benachbarten Bereich, mit einer konischen Fläche 56 versehen, deren Durchmesser sich in axialer Richtung nach innen (d.h. zur zweiten Welle 16) hin verengt. Der Abschnitt 42 ist seinerseits mit einer konischen Fläche 58 ausgestattet, die zur konischen Fläche 56 der Buchse 24 komplementär ist. Die konischen Flächen 56, 58 liegen demnach aneinander an. Hierzu wird insbesondere auf die Figur 1b verwiesen.

Der Abschnitt 42 bildet eine äußere, sich radial erstreckende Fläche 62, an die sich in axialer Richtung nach außen ein mit der Buchse 24 einteiliger oder damit fest verbundener Ring 60 mit einem gewissen Spalt anschließt. Der Ring 60 ist gezahnt oder gelocht und kann durch eine Schraube 64 (vgl. Figur 2), die sich durch eine Lücke in der Verzahnung oder ein Loch des Rings 60 und eine entsprechende Gewindebohrung im Getriebegehäuse 12 erstreckt, in Umfangsrichtung des Rings 60 arretiert werden.

Das Getriebegehäuse 12 ist durch einen Deckel 66, der durch Befestigungsmittel 68 (Schrauben) am Getriebegehäuse 12 befestigbar ist, verschließbar. Durch eine Öffnung 68 kann der Innenraum des Getriebegehäuses 12 mit einem Schmiermittel, wie Öl, befüllt werden. Die Öffnung kann durch einen Stopfen oder eine Schraube oder dergleichen verschlossen werden.

Nach alledem ist erkennbar, dass die Buchse 24, wenn die Schraube 64 abgenommen ist, durch eine Drehung des Rings 60 oder der Buchse 24 selbst, sei es von Hand oder durch ein geeignetes Werkzeug, gegenüber dem Getriebegehäuse 12 drehbar ist. Aufgrund des Gewindes 52 des Getriebegehäuses 12 und des Gewindes 54 der Buchse 24, welche Gewinde 52, 54 ineinandergreifen und zusammenwirken, hat eine derartige Drehung der Buchse 24 eine axiale Verschiebung der Buchse 24 und somit der ersten Welle 14 und des ersten Kegelzahnrads 18 gegenüber der zweiten Welle 16 und dem zweiten Kegelzahnrad 20 zur Folge. In der Figur 1 bewegt sich das erste Kegelzahnrad 18 demnach nach links (außen) oder rechts (innen). Gleichzeitig bewegt sich die konische Fläche 56 der Buchse 24 gegenüber der konischen Fläche 58 des Getriebegehäuses 12. Je weiter die Buchse 24 in Richtung nach innen, auf die zweite Welle 16 hin bewegt wird und je näher das erste Kegelzahnrad 18 zum zweiten Kegelzahnrad 20 bewegt wird, umso stärker ist die Verspannung zwischen dem Getriebegehäuse 12 und der Buchse 24. Diese Verspannung führt zu elastischen Verformungen des Getriebegehäuses 12 und in einem gewissen Maße auch der Buchse 24, die wiederum eine Arretierung der Buchse 24 am Getriebegehäuse 12 zur Folge haben. Dadurch kann, z.B. bei im Betrieb des Getriebezusammenbaus 10 auftretenden Vibrationen in einer Erntemaschine, ein unbeabsichtigtes Verstellen der Buchse 24 vermieden werden. Die Schraube 64 dient lediglich der Sicherung gegenüber einem unbeabsichtigten Verdrehen des Rings 60 und somit der Buchse 24. Da der durch Toleranzen in der Fertigung der Bestandteile des Getriebezusammenbaus 10 bedingte, benötigte Verstellhub der Buchse 24 in der Regel relativ gering ist und eine hinreichende Präzision für die Einstellung benötigt wird, haben die Gewinde 52, 54 eine recht kleine Steigung (Feingewinde). Zudem ist die Konizität der Flächen 56, 58 hinreichend klein gewählt, dass ein für die üblicherweise auftretenden Fertigungstoleranzen hinreichender Verstellhub der Buchse 24 möglich wird, ohne dass eine übermäßige, die Grenzen der Elastizität des für das Getriebegehäuse 12 bzw. die Buchse 24 verwendeten Materials überschreitende Verformung auftreten würde.

Ist die Buchse 24 demnach in eine Position gedreht worden, in welcher sich ein gewünschtes Spiel zwischen den Kegelzahnrädern 18, 20 ergibt, wird nur noch die Schraube 64 eingedreht.

Die konischen Flächen 56, 58 dienen zudem der Zentrierung der ersten Welle 14 und übertragen radiale und aufgrund der erwähnten, elastischen Verformung des Getriebegehäuses 12 und der Buchse 24 in einem gewissen Maße auch axiale Kräfte. In axialer Richtung wird die Buchse 24 und somit die erste Welle 14 zudem durch die Gewinde 52, 54 am Getriebegehäuse 12 abgestützt. Die Bauteileanzahl ist gegenüber dem Stand der Technik unter anderem dadurch reduziert worden, dass das Gewinde 52 am Getriebegehäuse 12 und nicht an einem separaten Bauteil angeordnet ist.

## Patentansprüche

1. Getriebezusammenbau (10) mit einem Getriebegehäuse (12), in dem eine erste Welle (14) mit einem ersten Kegelzahnrad (18) und eine zweite Welle (16) mit einem zweiten Kegelzahnrad (20) drehbar gelagert sind, wobei die Wellen (14, 16) einen Winkel untereinander einschließen und die erste Welle (14) in einer Buchse (24) gelagert ist, die mit einem Gewinde (54) ausgestattet ist, das mit einem mit dem Getriebegehäuse (12) verbundenen Gewinde (52) zusammenwirkt, sodass durch Drehen der Buchse (24) gegenüber dem Getriebegehäuse (12) eine axiale Verstellung der ersten Welle (14) erfolgt, und wobei sich die Buchse (24) durch eine von den Gewinden (52, 54) axial beabstandete Fläche (56) an einer komplementären Fläche (58) des Gehäuses (12) in radialer Richtung abstützt, **dadurch gekennzeichnet, dass** die axial beabstandete Fläche (56) und die komplementäre Fläche (58) konisch sind und sich in Richtung auf die zweite Welle (16) hin verengen.

2. Getriebezusammenbau (10) nach Anspruch 1, wobei die axial beabstandete Fläche (56) und die komplementäre Fläche (58) näher an der zweiten Welle (16) positioniert sind als die Gewinde (52, 54).

3. Getriebezusammenbau (10) nach Anspruch 1 oder 2, wobei die komplementäre Fläche (58) des Getriebegehäuses (12) und das mit dem Getriebegehäuse (12) verbundene Gewinde (52) an einem rohrförmigen Abschnitt (42) des Getriebegehäuses (12) angeordnet sind.

## Claims

1. Gearbox assembly (10) with a gearbox housing (12) in which a first shaft (14) with a first bevel gear (18) and a second shaft (16) with a second bevel gear (20) are rotatably mounted, wherein the shafts (14, 16) enclose an angle to each other and the first shaft (14) is mounted in a bushing (24) equipped with a thread (54), which interacts with a thread (52) connected to the gearbox housing (12) so that an axial adjustment of the first shaft (14) takes place by rotating the bushing (24) in relation to the gearbox housing (12), and wherein the bushing (24) is supported in the radial direction by a surface (56) axially spaced from the threads (52, 54) on a complementary surface (58) of the housing (12), **characterized in that** the axially spaced surface (56) and the complementary surface (58) are conical and taper in the direction towards the second shaft (16).

2. Gearbox assembly (10) according to Claim 1, wherein the axially spaced surface (56) and the complementary surface (58) are positioned closer to the second shaft (16) than the threads (52, 54).

3. Gearbox assembly (10) according to Claim 1 or 2, wherein the complementary surface (58) of the gearbox housing (12) and the thread (52) connected to the gearbox housing (12) are arranged on a tubular portion (42) of the gearbox housing (12).

## Revendications

1. Ensemble de transmission (10) avec un boîtier de transmission (12), dans lequel un premier arbre (14) est monté de manière à pouvoir tourner avec un premier engrenage conique (18) et un deuxième arbre (16) est monté de manière à pouvoir tourner avec un deuxième engrenage conique (20), les arbres (14, 16) formant un angle l'un avec l'autre et le premier arbre (14) étant monté dans une douille (24), qui est équipée d'un filetage (54) qui coopère avec un filetage (52) relié au boîtier de transmission (12) si bien que le premier arbre (14) est ajusté axialement par rotation de la douille (24) par rapport au boîtier de transmission (12), et la douille (24) prenant appui dans la direction radiale sur une surface complémentaire (58) du boîtier (12) par une surface (56) axialement espacée des filetages (52, 54), **caractérisé en ce que** la surface (56) axialement espacée et la surface complémentaire (58) sont coniques et se rétrécissent en direction du deuxième arbre (16).

2. Ensemble de transmission (10) selon la revendication 1, la surface (56) axialement espacée et la surface complémentaire (58) étant positionnées davantage à proximité du deuxième arbre (16) que les filetages (52, 54).

3. Ensemble de transmission (10) selon la revendication 1 ou 2, la surface complémentaire (58) du boîtier de transmission (12) et le filetage (52) relié au boîtier de transmission (12) étant disposés sur une section tubulaire (42) du boîtier de transmission (12).
